# EUROPEAN PATENT SPECIFICATION

(11) **EP 3 377 570 B1**
(45) Date of publication and mention of the grant of the patent: **08.01.2020**
(21) Application number: 16797887.3
(22) Date of filing: 17.11.2016
(51) Int. Cl.: C08K 5/00, C08K 5/098, C09D 167/08, C09F 9/00, C09D 11/105

(54) **COATING COMPOSITION COMPRISING AN AUTOXIDIZABLE ALKYD-BASED RESIN AND A DRIER COMPOSITION**
TROCKNERZUSAMMENSETZUNG UND AUTOXIDIERBARE ALKYDBASIERTE BESCHICHTUNGSZUSAMMENSETZUNG MIT SOLCH EINER TROCKNERZUSAMMENSETZUNG
COMPOSITION DE SÉCHAGE ET COMPOSITION DE REVÊTEMENT ALKYDIQUE AUTOXIDIZABLE COMPRENANT CETTE COMPOSITION DE SÉCHAGE

(30) Priority: 19.11.2015 EP 15195291
(43) Date of publication of application: 26.09.2018
(73) Proprietor: Akzo Nobel Coatings International B.V., 6824 BM Arnhem (NL)
(72) Inventor: FLAPPER, Jitte, NL-1115 GH Duivendrecht (NL)
(74) Representative: Akzo Nobel IP Department
(86) International application number: PCT/EP2016/077921
(87) International publication number: WO 2017/085154

(56) References cited:
- WO-A1-2015/082553
- WO-A2-2009/007288

## Description

### Field of the Invention

The present invention relates to a coating composition comprising an autoxidizable alkyd-based resin and a drier composition for drying such coating composition.

### Background of the Invention

Alkyd resins are widely used in coating compositions such as paint. An alkyd is a fatty acid functionalized polyester resin that comprises unsaturated fatty acids, such as for example oleic acid, linoleic acid, or linolenic acid. The fatty acid moieties of the alkyd resin react with oxygen from the atmosphere to form hydroperoxides which subsequently decompose to form free radicals. Reaction of these free radicals with the unsaturated carbon-carbon bonds of the fatty acid moieties causes covalent bonds to be formed between the alkyd polymer chains, thus forming cross-links between polymer chains. In this way, a liquid coating composition that comprises alkyd resin hardens to form a solid cured coating. This process is also referred to as auto-oxidation or drying.

The time for such a composition to dry depends on the concentration and type of unsaturated oil or fatty acids used to prepare the resin. Autoxidation and crosslinking of the unsaturated oil/fatty acid component can proceed unaided, but the time for drying is generally found to be unacceptably long for many practical purposes. The reactions are significantly accelerated by the presence of a metal-based drying catalyst, commonly referred to as a "drier". Whereas an alkyd coating may take months to dry in the absence of a drying catalyst, in the presence of such a catalyst, drying can be accomplished within a much shorter time. The metal within the drying catalyst catalyzes autoxidation by forming a complex with both atmospheric oxygen and the double bonds of the unsaturated fatty acid groups within the composition.

Examples of known drier salts include polyvalent salts containing cobalt, calcium, copper, zinc, iron, zirconium, manganese, barium, strontium, lithium and potassium as the cation; and halides, nitrates, sulphates, carboxylates, such as acetates, ethylhexanoates, octanoates and naphthenates, or acetoacetonates as the anion. The catalytic activity of the metal during decomposition of the (hydro)peroxide relies on the repeated transition of the metal ion from the lower to the higher oxidation state and back again, leading to reduction and oxidation of the hydroperoxides to catalyze and accelerate oxidation of the unsaturated oil component of the composition. For this reason, transition metals are commonly employed in such driers, as transition metals are capable of switching from a lower valence state to a higher valence state in a redox reaction with fatty acid peroxides present in the alkyd composition.

To date, driers based on cobalt have been most widely used as primary driers because of their good performance at ambient temperature. However, because of suspected carcinogenicity and/or toxicity of cobalt salts, it is now desired to find alternative drier compounds that show comparable drying performance to that of cobalt driers and which can replace cobalt based driers completely in airdrying coatings.

Primary driers based on non-cobalt metals, in particular primary driers comprising complexes of iron or manganese and nitrogen donor ligands are known. In J.W de Boer et al., The quest for Cobalt-Free Alkyd Paint Driers, Eur. J. Inorg. Chem, 2013, 3581-3591*,* an overview of such driers is given. One of the known cobalt-free driers is an iron catalyst based on a pentadentate bispidon ligand. This catalyst has a relatively high initial drying activity. In WO2015/082553 autoxidizable alkyd-based coating compositions are disclosed that comprise a drier composition comprising an iron-bispidon ligand complex and a complex of manganese and a nitrogen donor ligand. A drawback of Fe-bispidon catalysts is, however, that coatings made of coating compositions with such driers show poor final hardness.

Also vanadium compounds are known as alternative primary driers for cobalt driers. Such driers are for example disclosed in EP 870 811 A2. A disadvantage of driers based on vanadium is that they exhibit a stronger yellowing tendency than cobalt-based driers.

There is a need in the art for alkyd-based coating compositions with cobalt-free primary driers that combine good drying properties with an acceptably low yellowing tendency.

### Summary of the Invention

It has now been found that if in an autoxidizable alkyd-based coating composition a drier is used that combines a) a complex of iron and a bispidine ligand and b) a vanadium compound within certain concentration ranges, a dried coating with a good initial hardness and a good final hardness, whilst having an acceptably low yellowing tendency, is obtained.

Accordingly, the invention provides a coating composition comprising an autoxidizable alkyd-based resin and a drier composition, the drier composition comprising:
a) an iron-ligand complex comprising iron and at least one bispidine ligand; and
b) a vanadium compound,
   wherein the amount of the vanadium compound is such that the coating composition comprises vanadium in a concentration in the range of from 0.01 wt% to 1.0 wt%, based on the solid weight of alkyd-based resin and wherein the amount of iron-ligand complex is such that the coating composition comprises iron in a concentration in the range of from 0.5·10⁻⁴ wt% to 5·10⁻³ wt %, based on the solid weight of alkyd-based resin.

An important advantage of the coating composition of the present invention is that it yields a coating with sufficient initial and final hardness without giving rise to unacceptable yellowing. The amount of vanadium compound can be kept sufficiently low for minimizing yellowing tendency without negatively affecting the final hardness of the coating.

### Detailed Description of the Invention

The coating composition according to the invention is an autoxidizable alkyd-based coating composition, preferably an aqueous autoxidizable alkyd-based coating composition. The coating composition comprises an autoxidizable alkyd-based resin and a drier composition. The drier composition comprises:
a) an iron-ligand complex comprising iron and at least one bispidine ligand; and
b) a vanadium compound.

The bispidine ligand may be any bispidine ligand known to be suitable in metal-ligand driers for autoxidizable alkyd-based coating compositions. Suitable bispidine ligands are disclosed in H. Börzel et al., Iron coordination chemistry with tetra-, penta- and hexadendate bispidine-type ligands, Inorganica Chimica Acta 337 (2002) 407-419. A particular preferred bispidine ligand is a bispidon, also known as di-substituted 3-methyl-9-oxo-2,4-di(pyridine-2-yl)-7-(pyridine-2-ylmethyl)-3,7-diazabicyclo[3.3.1]nonane-1,5-dicarboxylate of the following general formula: 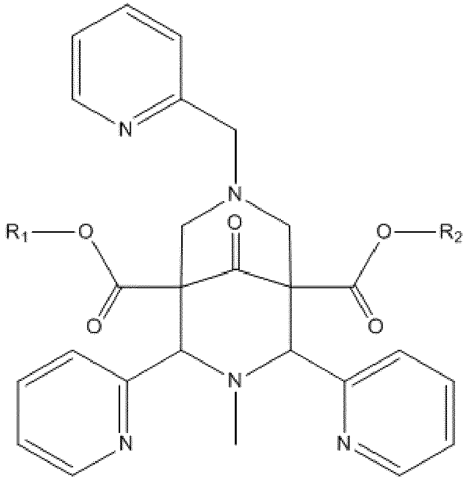 wherein R₁ and R₂ are, independently, selected from the group consisting of H, an alkyl group with 1 to 20 carbon atoms, an aryl group with 6 to 20 carbon atoms, and a polymeric residue. Preferably R₁ and R₂ are, independently, a straight or branched alkyl group with 1 to 20 carbon atoms, more preferably 1 to 10 carbon atoms, or an aryl group with 6 to 20 carbon atoms. Preferred bispidon ligands include di-alkyl, di-aryl or di-polymeric 3-methyl-9-oxo-2,4-di(pyridine-2-yl)-7-(pyridine-2-ylmethyl)-3,7-diazabicyclo[3.3.1]nonane-1,5-dicarboxylate. A particularly preferred ligand is dimethyl 3-methyl-9-oxo-2,4-di(pyridine-2-yl)-7-(pyridine-2-ylmethyl)-3,7-diazabicyclo[3.3.1]nonane-1,5-dicarboxylate.

The iron in the iron-ligand complex may have any suitable oxidation state. Preferably, the iron is in its 2+ oxidation state, i.e. Fe(II).

Preferably the iron-ligand complex is [(bispidon)Fe(II)Cl]Cl or [(bispidon)Fe(II)SO₄], more preferably [(bispidon)Fe(II)Cl]Cl, which is also known as iron(1+), chloro[dimethyl-9,9-dihydroxy-3-methyl-2,4-di(2-pyridyl-κN)-7-[(2-pyridinyl-κN)methyl]-3,7-diazabicyclo[3.3.1]nonane-1,5-dicarboxylate-κN3, κ N7]-, chloride(1-). This complex is registered under CAS nr. 478945-46-9 and commercially available in solution as Borchi ® Oxy-Coat from OMG Borchers.

The vanadium compound may be any vanadium compound known to be suitable as drier for autoxidizable alkyd-based coating compositions, such as a vanadium oxide, vanadium linoleate, vanadyl salts such as vanadyl carboxylates, vanadyl dicarboxylates, vanadyl phosphates, vanadyl acetonates such as for example vanadyl-bis-acetylacetonate ethylenediamine or vanadyl-bis-benzoylacetonate ethylenediamine and combinations of two or more thereof. Preferably, the vanadium compound is a vanadium oxide, a vanadyl salt, or a combination of a vanadium oxide and a vanadyl salt. Preferred vanadyl salts are vanadyl mono-carboxylates and vanadyl di-carboxylates, more preferably vanadyl acetate, vanadyl-2-ethylhexanoate, vanadyl oxalate, vanadyl malonate, or combinations of one or more thereof. Vanadyl oxalate or a combination of vanadium pentoxide and vanadyl oxalate are particularly preferred vanadium compounds. Preferably the vanadium compound is not a complex of vanadium and a nitrogen donor ligand. More preferably, the coating composition is free of any nitrogen donor ligand other than the bispidine ligand comprised in the iron-ligand complex.

If used in an aqueous coating composition, the vanadium compound preferably is a water-soluble vanadium compound. Reference herein to a water-soluble vanadium compound is to a vanadium compound that has a solubility in water of at least 0.5 grams per liter (at 20 °C), preferably at least 1.0 grams per liter (at 20 °C).

The drier composition and therewith the coating composition is preferably free of driers that are known as any primary driers other than the iron-ligand complex and the vanadium compound. Well-known primary driers include autoxidation catalysts comprising cobalt, manganese, cerium, iron or vanadium. Preferably, the drier composition is free of any cobalt-based, manganese-based, or cerium-based primary drier. The drier composition may further comprise compounds known as secondary driers, auxiliary driers or through driers, such as driers based on zirconium, bismuth, barium, aluminium, strontium, calcium, zinc, lithium, or potassium.

The autoxidizable alkyd-based resin may be any suitable autoxidizable alkyd-based resin. Such alkyd resins are known in the art. The alkyd resin may have any suitable molecular weight, oil length, or unsaturation of its fatty acid chains. The coating composition may be a coating composition based on an organic solvent or an aqueous coating composition, preferably an aqueous coating composition, i.e. a coating composition comprising an alkyd-resin emulsified in an aqueous medium. It has been found that in particular in an aqueous coating composition, the drier composition according to the invention has important advantages. A dried coating of such coating composition shows very good drying properties (good initial and final film hardness) whilst it does not show unacceptable yellowing.

It is an important advantage of the coating composition according to the invention that the amount of vanadium compound can be kept sufficiently low to avoid an unacceptable yellowing tendency, whilst initial and final hardness of the dried coating obtained are sufficiently high.

Preferably, the amount of the vanadium compound in the coating composition is such that the weight % of vanadium (calculated as metal) based on the solid weight of alkyd-based resin is less than 0.1 (V/solid alkyd %w/w), more preferably less than 0.08, even more preferably less than 0.06. In order to provide sufficient final hardness of the dried coating, the coating composition comprises at least 0.01 wt% vanadium, based on the solid weight of the alkyd-based resin, preferably at least 0.02 wt%, more preferably at least 0.03 wt%. A particularly suitable amount of vanadium is in the range of from 0.03 wt% to 0.06 wt%, based on the solid weight of alkyd-based resin.

The amount of the iron-ligand complex in the coating composition may be any suitable amount, including amounts of iron-ligand complex commonly used in alkyd-based coating compositions. The amount of iron (calculated as metal) in the coating composition does not exceed 5·10⁻³ wt%, based on the weight of solid alkyd-based resin, preferably does not exceed 2·10⁻³ wt%. A particularly suitable amount of iron is in the range of from 1·10⁻⁴ to 1·10⁻³ wt% based on the weight of solid alkyd-based resin.

### Examples

White paints was prepared by adding to 50 weight parts of alkyd emulsion (Synaqua 4804, a commercially available aqueous emulsion of a short oil alkyd with 50 wt% solid alkyd; ex. Arkema): 25 weight parts Tiona 595 (95% titanium dioxide), 2 weight parts coalescence solvent, 15 weight parts water, 1 weight parts dispersant, 0.6 weight parts defoamer, and 6.4 weight parts rheology modifiers. Different white paints (paints no. 1 to 12) were prepared by adding different driers to a thus-prepared white paint.

### Paint no. 1 (comparative)

A commercially available cobalt-containing drier (ASK-Drier 2005, ex. ASK Chemicals) with 6 wt% cobalt was added in an amount of 1.6 wt%, based on the weight of solid alkyd resin.

### Paint no. 2 (comparative)

A solution of a Fe-bispidon complex (Borchi ® Oxy-Coat, ex. Borchers OM Group; 1 wt% Fe-bispidon complex) was added in an amount of 0.3 wt%, based on the weight of solid alkyd resin.

### Paints no. 3 to 6 (comparative)

A solution of vanadyl oxalate (VP9950, ex. OMG Borchers; 6.5 wt% vanadium) was added in amounts of 0.3 wt% (paint no. 3), 0.6 wt% (paint no. 4), 1.0 wt% (paint no. 5) and 3.0 wt% (paint no. 6), based on the weight of solid alkyd resin.

### Paints no. 7 to 11 (invention)

A combination of Borchi ® Oxy-Coat and VP9950 was added in the amounts given in Table 1, based on the weight of solid alkyd resin.

### Paint no. 12 (comparative)

Borchi ® Oxy-Coat, manganese 2-ethyl hexanoate, and 1,4,7-trimethyl-1,4,7-triazacyclononane (ligand) were added to the white paint in the amounts given in Table 1, based on the weight of solid alkyd resin. The molar Mn to 1,4,7-trimethyl-1,4,7-triazacyclononane ratio was 2:1.

Films were prepared from the white paints and the Konig hardness was measured after 1 day, 7 days and 28 days at 23 °C and 50% relative humidity. After these 28 days, the films were exposed for a further 100 hours to a temperature of 50 °C in an oven and the Konig hardness was determined after an acclimatization of 4 hours at 23 °C at 50% relative humidity. The yellowing (b* values) of films made with the white paints was measured by the method described below.

### König hardness

The Konig hardness of films prepared from white paints no. 1 to 12 was assessed using the pendulum damping test according to DIN53157. A glass panel was coated with a 90 µm wet film, held at 23°C and 50% relative humidity and the hardness development in time was monitored with a König pendulum. The number of oscillations needed to reduce from an initial deflection of 6° to a deflection of 3° was measured.

### Yellowing

Color characteristics of paints no. 1 to 12 were measured on a Leneta opacity chart. Paint was applied on the chart using a rake with a radius of 0.7 mm and dried for 1 day at 23°C. Then, the color (CIE-Lab color space values) of the coatings was measured using a portable X-Rite Ci51 spectrophotometer. Then, the coatings were stored in the dark at 50°C for 14 days and the color of the coatings (aged coatings) was measured again. The b* values are a measure for the yellowness of the paint and are given in Table 1.

The results of the hardness and yellowness measurements as shown in Table 1, show that coating compositions with a drier that combines an iron-ligand complex and a vanadium compound, yield a coating with an initial hardness and a final hardness comparable to a coating from a coating composition with a cobalt drier (compare paints no. 7 to 9 with paint no. 1). Moreover, such good initial and final hardness can be obtained at a vanadium concentration that is sufficiently low to obtain a yellowing tendency that is similar to or lower than the yellowing tendency of a coating composition with a cobalt-containing drier.

**Table 1 - Hardness and yellowing tendencies of white alkyd emulsion paints with different driers**

| Paint no. | Co drier^{a} | | BOC^{b} | | VP9950^{c} | | Mn/ligand | König hardness | | | | yellowing | |
|---|---|---|---|---|---|---|---|---|---|---|---|---|---|
| | Drier on solid resin | Co on solid resin | Drier on solid resin | Fe on solid resin | Drier on solid resin | V on solid resin | Mn on solid resin | 1d | 7d | 28d | +100h, 50 °C | 1d | 14d |
| | % w/w | % w/w | % w/w | % w/w | % w/w | % w/w | % w/w | no. oscillations | | | | b* value | |
| 1 | 1.6 | 0.024 | | | | | | 16 | 27 | 39 | 53 | 2.63 | 5.5 |
| 2 | - | | 0.3 | 2.7·10⁻⁴ | - | | | 15 | 18 | 20 | 24 | 1.71 | 4.23 |
| 3 | - | | - | | 0.3 | 0.02 | | 10 | 17 | 20 | 29 | 1.12 | 4.05 |
| 4 | - | | - | | 0.6 | 0.04 | | 12 | 17 | 20 | 50 | 1.41 | 4.76 |
| 5 | - | | - | | 1.0 | 0.07 | | 16 | 22 | 35 | 83 | 3.7 | 6.7 |
| 6 | - | | - | | 3.0 | 0.20 | | 17 | 24 | 35 | 78 | 6.81 | 8.05 |
| 7 | - | | 0.1 | 0.9·10⁻⁴ | 0.6 | 0.04 | | 15 | 21 | 25 | 46 | | |
| 8 | - | | 0.3 | 2.7·10⁻⁴ | 0.6 | 0.04 | | 15 | 19 | 22 | 58 | 2.42 | 5.09 |
| 9 | - | | 1.0 | 9.0·10⁻⁴ | 0.6 | 0.04 | | 16 | 23 | 28 | 57 | | |
| 10 | - | | 0.3 | 2.7·10⁻⁴ | 0.3 | 0.02 | | 15 | 18 | 20 | 36 | 2.23 | 4.81 |
| 11 | - | | 0.3 | 2.7·10⁻⁴ | 1.0 | 0.07 | | 16 | 20 | 34 | 79 | 3.12 | 6.1 |
| 12 | - | | 0.3 | 2.7·10⁻⁴ | - | | 0.07 | 15 | 18 | 19 | 25 | 3.21 | 7.86 |

| | | | | | | | | | | | | | |
|---|---|---|---|---|---|---|---|---|---|---|---|---|---|
| ^{a} ASK-Drier 2005, 6 wt% Co; ^{b} Borchi ® Oxy-Coat, 0.09 wt% Fe; ^{c} VP9950, 6.5 wt% V | | | | | | | | | | | | | |

## Claims

1. A coating composition comprising an autoxidizable alkyd-based resin and a drier composition, the drier composition comprising:
a) an iron-ligand complex comprising iron and at least one bispidine ligand; and
b) a vanadium compound,
wherein the amount of the vanadium compound is such that the coating composition comprises vanadium in a concentration in the range of from 0.01 wt% to 1.0 wt%, based on the solid weight of alkyd-based resin and wherein the amount of iron-ligand complex is such that the coating composition comprises iron in a concentration in the range of from 0.5·10⁻⁴ wt% to 5·10⁻³ wt %, based on the solid weight of alkyd-based resin.

2. A coating composition according to claim 1, wherein the coating composition is an aqueous coating composition.

3. A coating composition according to claim 1 or 2, wherein the bispidine ligand is a di-substituted 3-methyl-9-oxo-2,4-di(pyridine-2-yl)-7-(pyridine-2-ylmethyl)-3,7-diazabicyclo[3.3.1]nonane-1,5-dicarboxylate according to the following general formula: 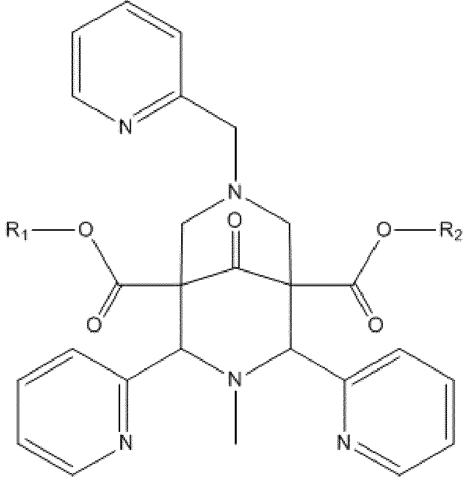 wherein R₁ and R₂ are, independently, selected from the group consisting of H, a C₁ - C₂₀ alkyl, a C₆ - C₂₀ aryl, and a polymeric residue.

4. A coating composition according to claim 3, wherein the ligand is dimethyl 3-methyl-9-oxo-2,4-di(pyridine-2-yl)-7-(pyridine-2-ylmethyl)-3,7-diazabicyclo[3.3.1]nonane-1,5-dicarboxylate.

5. A coating composition according to claim 4, wherein the iron-ligand complex in a) is a Fe(II) complex of dimethyl 3-methyl-9-oxo-2,4-di(pyridine-2-yl)-7-(pyridine-2-ylmethyl)-3,7-diazabicyclo[3.3.1]nonane-1,5-dicarboxylate.

6. A coating composition according to claim 5, wherein the iron-ligand complex is iron(1+), chloro[dimethyl-9,9-dihydroxy-3-methyl-2,4-di(2-pyridyl-κN)-7-[(2-pyridinyl-κN)methyl]-3,7-diazabicyclo[3.3.1]nonane-1,5-dicarboxylate-κN3, κN7]-, chloride(1-).

7. A coating composition according to any one of the preceding claims, wherein the vanadium compound is a water-soluble vanadium compound.

8. A coating composition according to claim 7, wherein the water-soluble vanadium compound is a vanadium oxide and/or a vanadyl salt.

9. A coating composition according to claim 8, wherein the vanadyl salt is a vanadyl mono-carboxylate and/or a vanadyl di-carboxylate.

10. A coating composition according to claim 9, wherein the vanadyl salt is vanadyl oxalate.

11. A coating composition according to any one of the preceding claims, wherein the amount of the vanadium compound is such that the coating composition comprises vanadium in a concentration in the range of from 0.03 wt% to 0.06 wt%, based on the solid weight of alkyd-based resin.

12. A coating composition according to any one of the preceding claims, where the amount of iron-ligand complex is such that the coating composition comprises iron in a concentration in the range of from 1·10⁻⁴ wt% to 1·10⁻³ wt %, based on the solid weight of alkyd-based resin.

## Patentansprüche

1. Beschichtungszusammensetzung mit einem autooxidierbaren, alkydbasierten Harz und einer Trocknerzusammensetzung, wobei die Trocknerzusammensetzung Folgendes umfasst:
a) einen Eisen-Ligand-Komplex, umfassend Eisen und wenigstens einen Bispidin-Ligand, und
b) eine Vanadiumverbindung,
wobei die Menge der Vanadiumverbindung derart ist, dass die Beschichtungszusammensetzung Vanadium in einer Konzentration in dem Bereich von 0,01 Gew.-% bis 1,0 Gew.-%, basierend auf dem Feststoffgewicht des alkydbasierten Harzes, umfasst, und wobei die Menge des Eisen-Ligand-Komplexes derart ist, dass die Beschichtungszusammensetzung Eisen in einer Konzentration in dem Bereich von 0,5·10⁻⁴ Gew.-% bis 5·10⁻³ Gew.-%, basierend auf dem Feststoffgewicht des alkydbasierten Harzes, umfasst.

2. Beschichtungszusammensetzung nach Anspruch 1, wobei die Beschichtungszusammensetzung eine wässrige Beschichtungszusammensetzung ist.

3. Beschichtungszusammensetzung nach Anspruch 1 oder 2, wobei der Bispidin-Ligand ein disubstituiertes 3-methyl-9-oxo-2,4-di(pyridin-2-yl)-7-(pyridin-2-ylmethyl)-3,7-diazabicyclo[3.3.1]nonan-1,5-Dicarboxylat nach der folgenden allgemeinen Formel ist: 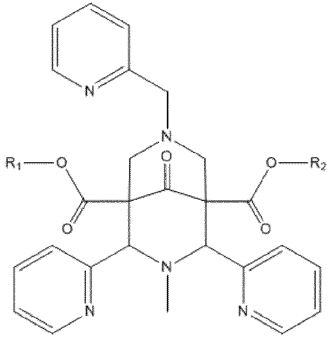 wobei R₁ und R₂ unabhängig ausgewählt sind aus der Gruppe, bestehend aus H, einem C₁ - C₂₀ Alkyl, einem C₆ - C₂₀ Aryl und einem Polymerrest.

4. Beschichtungszusammensetzung nach Anspruch 3, wobei der Ligand Dimethyl 3-methyl-9-oxo-2,4-di(pyridin-2-yl)-7-(pyridin-2-ylmethyl)-3,7-diazabicyclo[3.3.1]nonan-1,5-Dicarboxylat ist.

5. Beschichtungszusammensetzung nach Anspruch 4, wobei der Eisen-Ligand-Komplex in a) ein Fe(II) Komplex von Dimethyl 3-methyl-9-oxo-2,4-di(pyridin-2-yl)-7-(pyridin-2-ylmethyl)-3,7-diazabicyclo[3.3.1]nonan-1,5-Dicarboxylat ist.

6. Beschichtungszusammensetzung nach Anspruch 5, wobei der Eisen-Ligand-Komplex Eisen(1+), Chlor[dimethyl-9,9-dihydroxy-3-methyl-2,4-di(2-pyridyl-κN)-7-[(2-pyridinyl-κN)methyl]-3,7-diazabicyclo[3.3.1]nonan-1,5-dicarboxylat-κN3, κN7]-, Chlorid(1-) ist.

7. Beschichtungszusammensetzung nach einem der vorhergehenden Ansprüche, wobei die Vanadiumverbindung eine wasserlösliche Vanadiumverbindung ist.

8. Beschichtungszusammensetzung nach Anspruch 7, wobei die wasserlösliche Vanadiumverbindung ein Vanadiumoxid und/oder ein Vanadylsalz ist.

9. Beschichtungszusammensetzung nach Anspruch 8, wobei das Vanadylsalz ein Vanadyl-Monocarboxylat und/oder ein Vanadyl-Dicarboxylat ist.

10. Beschichtungszusammensetzung nach Anspruch 9, wobei das Vanadylsalz Vanadyloxalat ist.

11. Beschichtungszusammensetzung nach einem der vorhergehenden Ansprüche, wobei die Menge der Vanadiumverbindung derart ist, dass die Beschichtungszusammensetzung Vanadium in einer Konzentration in dem Bereich von 0,03 Gew.-% bis 0,06 Gew.-%, basierend auf dem Feststoffgewicht des alkydbasierten Harzes, umfasst.

12. Beschichtungszusammensetzung nach einem der vorhergehenden Ansprüche, wobei die Menge des Eisen-Ligand-Komplexes derart ist, dass die Beschichtungszusammensetzung Eisen in einer Konzentration in dem Bereich von 1·10⁻¹ Gew.-% bis 1·10⁻³ Gew.-%, basierend auf dem Feststoffgewicht des alkydbasierten Harzes, umfasst.

## Revendications

1. Composition de revêtement comprenant une résine à base d'alkyde auto-oxydable et une composition de siccatif, la composition de siccatif comprenant :
a) un complexe fer-ligand comprenant du fer et au moins un ligand bispidine ; et
b) un composé de vanadium,
dans laquelle la quantité du composé de vanadium est telle que la composition de revêtement comprend du vanadium à une concentration comprise dans la plage allant de 0,01% en poids à 1,0% en poids, sur la base du poids solide de résine à base d'alkyde et dans laquelle la quantité de complexe fer-ligand est telle que la composition de revêtement comprend du fer à une concentration comprise dans la plage allant de 0,5·10⁻⁴% en poids à 5·10⁻³% en poids, sur la base du poids solide de résine à base d'alkyde.

2. Composition de revêtement selon la revendication 1, dans laquelle la composition de revêtement est une composition de revêtement aqueuse.

3. Composition de revêtement selon la revendication 1 ou 2, dans laquelle le ligand bispidine est un 3-méthyl-9-oxo-2,4-di(pyridine-2-yl)-7-(pyridine-2-ylméthyl)-3,7-diazabicyclo[3.3.1]nonane-1,5-dicarboxylate di-substitué selon la formule générale suivante : 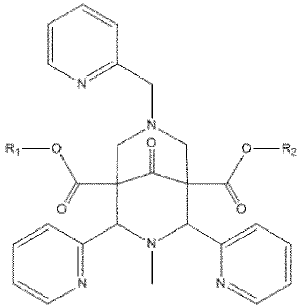 où R₁ et R₂ sont indépendamment choisis dans le groupe constitué de H, un alkyle en C₁ à C₂₀, un aryle en C₆ à C₂₀ et un résidu polymère.

4. Composition de revêtement selon la revendication 3, dans laquelle le ligand est le 3-méthyl-9-oxo-2,4-di(pyridine-2-yl)-7-(pyridine-2-ylméthyl)-3,7-diazabicyclo[3.3.1]nonane-1,5-dicarboxylate de diméthyle.

5. Composition de revêtement selon la revendication 4, dans laquelle le complexe fer-ligand en a) est un complexe Fe(II) de 3-méthyl-9-oxo-2,4-di(pyridine-2-yl)-7-(pyridine-2-ylméthyl)-3,7-diazabicyclo[3.3.1]nonane-1,5-dicarboxylate de diméthyle.

6. Composition de revêtement selon la revendication 5, dans laquelle le complexe fer-ligand est le fer(1+), chloro[diméthyl-9,9-dihydroxy-3-méthyl-2,4-di (2-pyridyl-KN)-7-[(2-pyridinyl-KN)méthyl]-3,7-diazabicyclo[3.3.1]nonane-1,5-dicarboxylate-KN3, κN7]-, chlorure (1-).

7. Composition de revêtement selon l'une quelconque des revendications précédentes, dans laquelle le composé de vanadium est un composé de vanadium soluble dans l'eau.

8. Composition de revêtement selon la revendication 7, dans laquelle le composé de vanadium soluble dans l'eau est un oxyde de vanadium et/ou un sel de vanadyle.

9. Composition de revêtement selon la revendication 8, dans laquelle le sel de vanadyle est un mono-carboxylate de vanadyle et/ou un di-carboxylate de vanadyle.

10. Composition de revêtement selon la revendication 9, dans laquelle le sel de vanadyle est l'oxalate de vanadyle.

11. Composition de revêtement selon l'une quelconque des revendications précédentes, dans laquelle la quantité du composé de vanadium est telle que la composition de revêtement comprend du vanadium en une concentration comprise dans la plage allant de 0,03% en poids à 0,06% en poids, sur la base du poids solide de résine à base d'alkyde.

12. Composition de revêtement selon l'une quelconque des revendications précédentes, dans laquelle la quantité de complexe fer-ligand est telle que la composition de revêtement comprend du fer à une concentration comprise dans la plage allant de 1·10⁻⁴% en poids à 1·10⁻³% en poids, sur la base du poids solide de résine à base d'alkyde.
